**Europäisches Patentamt**

**European Patent Office**

**Office européen des brevets**

(19)

(11) Veröffentlichungsnummer: **0 201 720**
**B1**

(12) # EUROPÄISCHE PATENTSCHRIFT

(45) Veröffentlichungstag der Patentschrift:
05.09.90

(21) Anmeldenummer: 86104788.4

(22) Anmeldetag: 08.04.86

(51) Int. Cl.⁵: **G05D 1/03**

(54) **Transportsystem.**

(30) Priorität: 15.04.85 DE 3513389
12.11.85 DE 3540023

(43) Veröffentlichungstag der Anmeldung:
20.11.86 Patentblatt 86/47

(45) Bekanntmachung des Hinweises auf die Patenterteilung:
05.09.90 Patentblatt 90/36

(84) Benannte Vertragsstaaten:
AT BE CH DE FR GB IT LI NL SE

(56) Entgegenhaltungen:
AU-B- 438 251
DE-A- 2 059 659
DE-B- 2 046 924
US-A- 3 787 726

PATENT ABSTRACTS OF JAPAN, Band 9,
Nr. 58 (P-341)[1781], 14. März 1985; & JP - A
- 59 194 217 (NIPPON) 05.11.1984
PATENT ABSTRACTS OF JAPAN, Band 8,
Nr. 165 (P-291)[1602], 31. Juli 1984; & JP - A
- 59 60514 (SHINKOUBE) 06.04.1984

(73) Patentinhaber: Heckler & Koch GmbH,
D-7238 Oberndorf/Neckar(DE)

(72) Erfinder: Stierle, Hermann, Heuetstrasse 20,
D-7460 Balingen-Erzingen(DE)

(74) Vertreter: Charrier, Rolf, Dipl.-Ing.,
Postfach 260 Rehlingenstrasse 8,
D-8900 Augsburg 31(DE)

## Beschreibung

Die Erfindung betrifft ein Transportsystem nach dem Oberbegriff des Patentanspruches 1.

Bekannt sind Transportsysteme bei denen führerlose Fahrzeuge einer Spur folgen, die durch Induktionsschleifen festgelegt ist, welche unter der Oberfläche, also unterirdisch oder im Boden eines Raumes angebracht sind. Dies bedeutet, daß einmal die Spuren nur mit großem Aufwand veränderbar sind und zum anderen die Induktionsschleifen laufend unter Strom stehen müssen.

Die DE-A 34 33 556 beschreibt ein Transportsystem der eingangs genannten Art, bei dem Spurband und seitliche Stationsmarkierungen aus auf dem Boden aufgebrachter Farbe bestehen und die Sensoren optische Sensoren sind. Hierbei sind die Spuren leicht veränderbar, jedoch setzt jede Veränderung der Stationsmarkierungen eine Neuprogrammierung der Steuerschaltung voraus. Die Spur ist stets geschlossen, Abzweigungen sind nicht möglich.

Die AU-B 4 38 251 hat ein Transportsystem zum Gegenstand, bei dem der erste mittige Sensor aus zwei rechtwinklig zum aus Eisen bestehenden Spurband angeordneten Elektromagneten besteht, die unterschiedlich stark bedämpft werden, wenn die Fahrzeuglängsachse nicht mit der Längsachse des Spurbandes fluchtet. Diese unterschiedliche Bedämpfung bewirkt Lenkbefehle für die Lenkung des Fahrzeugs. Zur Steuerung des Fahrzeugs sind an diesem seitliche Sensoren in Form von Magnetschaltern vorgesehen, die durch Parmanent- oder Elektromagneten am Boden betätigt werden.

Die DE-B 2 046 924 hat ein Transportsystem der eingangs genannten Art zum Gegenstand, bei dem eine mittige Sensoreinrichtung aus einem mittigen und zwei seitlichen Sensoren, die auf einer rechtwinklig zur Fahrzeuglängsachse verlaufenden Geraden angeordnet sind, bestehen. Erfaßt einer der seitlichen Sensoren das Spurband, dann wird eines von zwei Antriebsrädern beschleunigt oder abgebremst, bis die Fahrzeuglängsachse wieder auf die Längsachse des Spurbands ausgerichtet ist. Die Steuerung des Fahrzeugs erfolgt ebenfalls über Magnetschalter und am Boden angeordnete Magnete.

Nach Patent Abstracts of Japan, Band 9, Nummer 58 sowie der JP-A 59 164 217 sind zwei mittige Sensoren zur Verfolgung des Spurbands und ein seitlicher Sensor zum Erfassen von seitlichen Codemarkierungen vorgesehen, wobei die Sensoren Wechselspannungsoszillatoren sind, die durch das Spurband und die Codemarkierungen in Folge Wirbelstromerzeugung bedämpft werden.

Nach Patent Abstracts of Japan, Band 8, Nummer 165, 31. Juli 1984 und der JP-A 59 60 514 weist eine Sensoreinrichtung einen am Rand einer rotierenden Scheibe angeordneten Sensor auf, wobei die Scheibe sich um eine vertikale Achse dreht und damit der Sensor das Spurband, das wesentlich schmäler ist als der Durchmesser der Scheibe, überstreicht. Mit der die Scheibe antreibenden Welle ist ein Drehwinkeldetektor verbunden, der ein Signal erzeugt, wenn die Scheibe eine vorgegebene Drehstellung einnimmt. Überstreicht der Sensor das Spurband und erzeugt dabei ein Signal, dann wird dessen Zeitverschiebung zum Detektorsignal erfaßt, womit ein Maß für die Relativstellung zwischen Spurband und Wellenachse gegeben ist.

Der Erfindung liegt die Aufgabe zugrunde ein Transportsystem anzugeben, dessen Spurband exakt verfolgt wird und das eine äußerst flexible Steuerung der führerlosen Fahrzeuge ermöglicht.

Diese Aufgabe wird erfindungsgemäß gelöst durch ein Transportsystem mit den Merkmalen des Kennzeichens des Patentanspruches 1. Vorteilhafte Ausgestaltungen sind den Unteransprüchen entnehmbar.

Ausführungsbeispiele des Transportsystems werden nachstehend anhand der Zeichnungen näher erläutert. Es zeigen:

Fig. 1 schematisch eine Anordnung von Sensoren, wie sie bei den führerlosen Fahrzeugen vorgesehen sind;

Fig. 2 (a) bis (c) Darstellungen zur Erläuterung der Spurverfolgung einschließlich Spurabzweigungen;

Fig. 3 Darstellungen zur Erläuterung von Kodierungen wie sie zur Steuerung der führerlosen Fahrzeuge verwendbar sind;

Fig. 4 eine Ansicht einer weiteren Sensoranordnung bei schematisch angedeutetem Transportfahrzeug;

Fig. 5 eine Draufsicht auf den Sensor nach Fig. 4;

Fig. 6 ein Blockschaltbild der verwendeten Schaltung und

Fig. 7 ein Diagramm zur Erläuterung des Lenkverhaltens des Fahrzeugs.

Das Spurband 12 ist gem. einer bevorzugten Ausführungsform als dünner Aluminiumstreifen ausgeführt, der am Boden angeklebt wird. Die Sensoren weisen jeweils einen Hochfrequenzoszillator auf, dessen Schwingung gedämpft wird, wenn der Aluminiumstreifen in der Nähe des Oszillators ist. Dieser bedämpfte Zustand wird festgestellt und zur Lenkung des führerlosen Fahrzeugs verwendet.

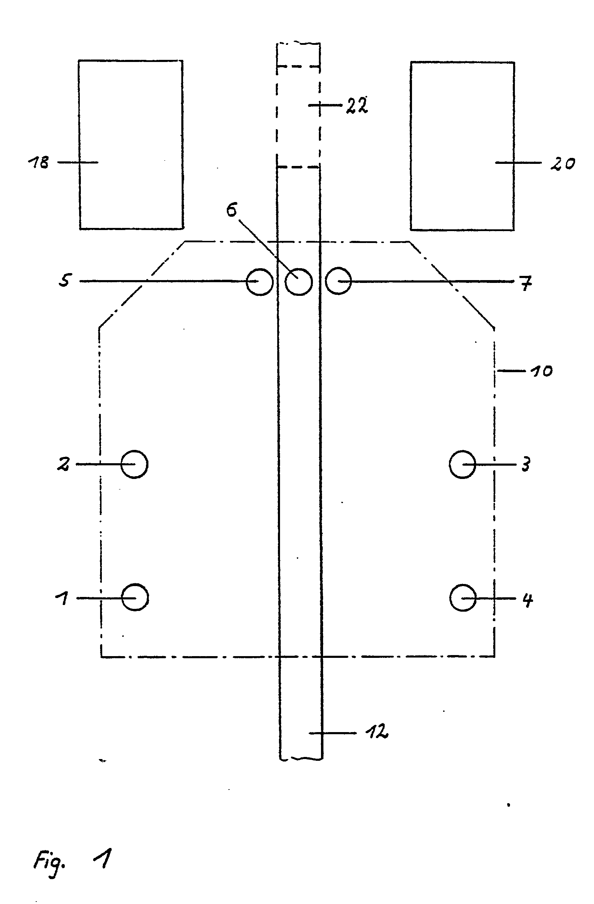

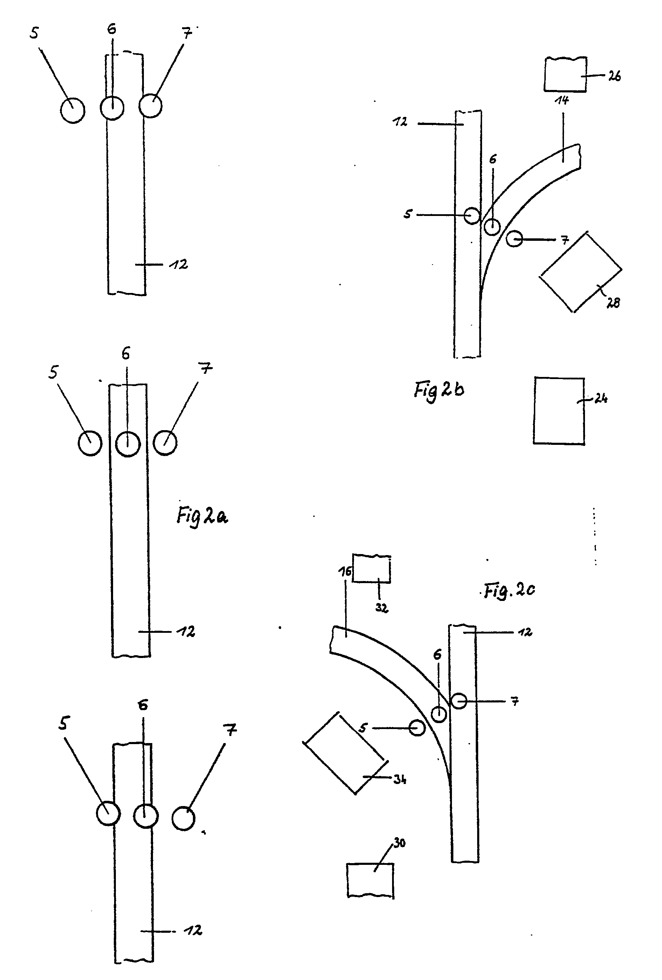

Fig. 1 zeigt eine Anordnung 10 von Sensoren 1 bis 7 in einer bevorzugten Konfiguration. Der mittlere Sensor 6 dient zur Feststellung des Vorhandenseins der Spur 12 überhaupt. Er sollte immer bedämpft sein. Ist die Spur über eine bestimmte kurze Strecke unterbrochen, so wird ein Signal erzeugt, das das Fahrzeug allmählich anhält. Die zu beiden Seiten des mittleren Sensors 6 angeordneten Leitsensoren 5 und 7 dienen der Spurverfolgung in einer Weise, wie sie etwa bei Videoplattenrecordern üblich ist. Folgt das Fahrzeug exakt zentriert der Spur, dann ist keiner der beiden Leitsensoren 5, 7 bedämpft und ein Vergleich der von ihnen abgegebenen Signale bewirkt kein Ausgangssignal. Bei einer Abweichung nach links oder rechts wird der entsprechende Sensor durch die Spur 12 bedämpft, so daß ein positives oder negatives Fehlersignal beim Vergleich entsteht und eine entsprechende Gegenlenkung des Fahrzeugs auslöst. Fig. 2a zeigt die drei unterschiedlichen Situationen.

Bei der Stellung der Sensoren 5 bis 7 in Fig. 2a oben ist das Fahrzeug von der Spur 12 nach links abgewichen, wodurch der rechte Sensor 7 bedämpft wird, was zu einer Lenkkorrektur des Fahrzeugs nach recht führt, bis die Stellung der Sensoren 5 bis 7 relativ zur Spur 12 erhalten wird, die in Fig. 2a in der Mitte dargestellt ist. Hierbei sind dann die beiden seitlichen Leitsensoren 5 und 7 unbedämpft. Ist dagegen das Fahrzeug von der Spur 12 nach rechts abgewichen, wie dies in Fig. 2a unten dargestellt ist, dann wird der linke Sensor 5 bedämpft, was zu einer Lenkkorrektur des Fahrzeugs nach links führt, bis wiederum die beiden Leitsensoren 5 und 7 in gleicher Weise unbedämpft sind, entsprechend der Stellung in der Mitte der Fig. 2a.

An Positionen an denen Funktionen auszuführen sind, werden Informationen zur Verfügung gestellt, die zusammen mit den programmierten Schritten die gewünschten Funktionen auslösen. Diese Informationsgabe erfolgt vor Ort mittels Markierungen, die seitlich der Spur 12 angebracht sind und durch entsprechende Kodesensoren 1, 2 bzw. 3, 4 abgetastet werden können.

Bevor weiter auf die Kodiermöglichkeiten eingegangen wird, sei kurz anhand der Figuren 2b und 2c ein Abbiegen des führerlosen Fahrzeugs nach rechts auf die Abzweigespur 14 bzw. nach links auf die Abzweigespur 16 erläutert.

Hat das Fahrzeug den Befehl, nach rechts (Fig. 2b) abzubiegen, dann übernimmt an der Abzweigestelle der Sensor 7 vorranging die Steuerung, solange bis der Sensor 5 beim Abbiegen frei links neben der Abzweigespur 14 angelangt ist. Bei einem Abbiegen nach links (Fig. 2c) übernimmt umgekehrt der Sensor 5 vorrangig die Steuerung, bis der Sensor 7 frei neben der Spur 16 angelangt ist.

Bei dem nach Fig. 2a erläuterten Lenkprogramm ist bei einer Abweichung des Fahrzeugs von der Spur 12 nach links der rechte Sensor 7 für eine Lenkkorrektur nach rechts bestimmend, während bei einer Fahrzeugabweichung nach rechts der linke Sensor 5 für eine Lenkkorrektur nach links bestimmend ist.

Soll an einer Abzweigestelle nach rechts das Fahrzeug nach. rechts abbiegen und der Abzweigespur 14 folgen oder soll an einer Abzweigestelle nach links das Fahrzeug geradeaus der Spur 12 folgen, was vor der jeweiligen Abbiegestelle zuvor als Befehl dem Fahrzeug übermittelt wurde, dann wird der linke Sensor 5 außer Funktion gesetzt und der rechte Sensor 7 übernimmt allein die Steuerung. Ist der rechte Sensor 7 unbedämpft, dann erfolgt ein Lenkkorrektursignal nach links. Ist er dagegen bedämpft, erfolgt ein Lenkkorrektursignal nach rechts.

Soll bei einer Abzweigstelle nach links das Fahrzeug der Abzweigespur 16 folgen oder soll bei einer Abzweigestelle nach rechts das Fahrzeug geradeaus der Spur 12 folgen, dann wird der rechte Sensor 7 außer Funktion gesetzt und die Steuerung übernimmt allein der linke Leitsensor 5. Ist diese unbedämpft, erfolgt eine Lenkkorrektur nach rechts. Ist er dagegen bedämpft, dann wird eine Lenkkorrektur nach links ausgeführt.

Fig. 1 zeigt zwei verschiedene mögliche Kodierungen, über die gewünschte Funktionen ausgelöst werden können. Gem. Fig. 1 befinden sich zu beiden Seiten der Spur 12 in gewissem Abstand Markierungen 18, 20, die beim bevorzugten Ausführungsbeispiel ebenfalls Aluminiumstreifenstücke sind.

Zur Abtastung der Kodierungen 18, 20 sind zwei Sensorpaare 1, 2 und 3, 4 in einem seitlichen Abstand vom Mittensensor 6 vorgesehen, der dem Abstand der Kodierungen 18, 20 von der Spur 12 entspricht. Die Kodierungssensoren 1 bis 4 sind vorzugsweise auch in Fahrtrichtung gegenüber den Sensoren 5, 6, 7 nach rückwärts versetzt. Die Feststellung des Vorhandenseins derartiger Kodierungen 18, 20 kann im Fahrzeug beispielsweise folgende Funktionen auslösen:

1. Das Fahrzeug hält und wartet eine bestimmte vorzugsweise programmierte Zeit, bevor es weiterfährt, oder es erfolgt ein Absolutstop.

2. Es wird ein Unterprogramm ausgelöst, etwa derart, daß nach Anhalten ein Entladen des Fahrzeugs durchgeführt wird oder eine Vorrichtung zum Beladen in Betrieb gesetzt wird.

3. Von den Kodierungen können Zählimpulse ausgelöst werden die zur Fortschaltung bzw. Steuerung eines gespeicherten Programms dienen.

4. Es wird ein Abbiegebefehl nach rechts (Fig. 2b) oder nach links (Fig. 2c) erzeugt.

Fig. 1 zeigt auch eine Alternative einer Kodierungsmöglichkeit, bei der die Spur 12 unterbrochen ist und an dieser Stelle seitlich die Kodierungen 18, 20 angebracht sind. Die Unterbrechungsstelle 22 wird mittels des Mittensensors 6 festgestellt und dieses Signal wird gemeinsam mit den seitlichen Kodierungen zur Funktionsauslösung verwendet beispielsweise zu einem Absolutstop, der nur durch Betätigen einer Starttaste oder über einen Fernsteuerimpuls aufgehoben werden kann.

Fig. 2b und 2c zeigen die Steuerung eines Abbiegens nach rechts bzw. links unter einseitiger Anordnung von Kodierungen 24, 26, 28 bzw. 30, 32, 34. Wird die Kodierung 24 gelesen, wird das Fahrzeug für ein Abbiegen nach rechts programmiert, etwa durch eine bestimmte Schalterstellung, einen anstehenden gespeicherten Abbiegebefehl oder ausgelöst durch einen bestimmten Zählerstand. Es wird auf das Lenkprogramm gem. Fig. 2b (vorrangige Steuerung durch Sensor 7) umgeschaltet. Bei Erreichen der Kodierung 28 erfolgt dann Rückschaltung auf die Verfolgung der eingeschlagenen Abzweigespur 14.

Erreicht der Kodesensor 3 bzw. 4 die Kodierung 28, dann wird die Lenkungssteuerung allein durch den Sensor 7 aufgehoben und die Lenkungssteuerung wird wieder von beiden Leitsensoren 5, 7 übernommen, wie im Zusammenhang mit Fig. 2a beschrieben.

Wird durch die Kodierung 24 über den Kodierungssensor 3, 4 der Befehl ausgelöst, daß das Fahrzeug an der Abzweigestelle gem. Fig. 2b geradeaus fahren soll, dann wird auf das Lenkprogramm geschaltet, welches im Zusammenhang mit Fig. 2c erläutert wurde, bei der die Steuerung durch den Leitsensor 5 vorrangig ist. Erfaßt der Kodierungs-

sensor 3, bzw. 4 die Kodierung 26, dann erfolgt die Lenksteuerung wiederum durch die beiden Leitsensoren 5, 6, wie im Zusammenhang mit Fig. 2a beschrieben.

Entsprechedes gilt für den in Fig. 2c dargestellten Fall. Erfasst der Kodierungssensor 1, 2 die Kodierung 30, dann wird hierdurch entweder der Befehl ausgelöst, daß das Fahrzeug nach rechts abbiegen soll oder es wird der Befehl ausgelöst, daß das Fahrzeug geradeaus der Spur 12 folgend fahren soll. Wird der Befehl eines Linksabbiegens ausgelöst, dann wird auf das linke Programm umgeschaltet, wie es anhand der Fig. 2c erläutert wurde, für die die Lenkungssteuerung der Sensor 5 übernimmt. Erfasst der Sensor 1 bzw. 2 die Kodierung 34, dann wird wiederum auf das Lenkprogramm umgeschaltet, das anhand der Fig. 2a erläutert wurde. Wurde dagegen bei Erreichen der Kodierung 30 ein Geradeausbefehl ausgelöst, dann wird auf das Lenkprogramm umgeschaltet, das anhand der Fig. 2b erläutert wurde, wo die Steuerung durch den Sensor 7 erfolgt. Erreichen die Kodierungssensoren 1, 2 die Kodierung 32, dann wird die Steuerung wiederum von den Leitsensoren 5, 7 übernommen, siehe Fig. 2a.

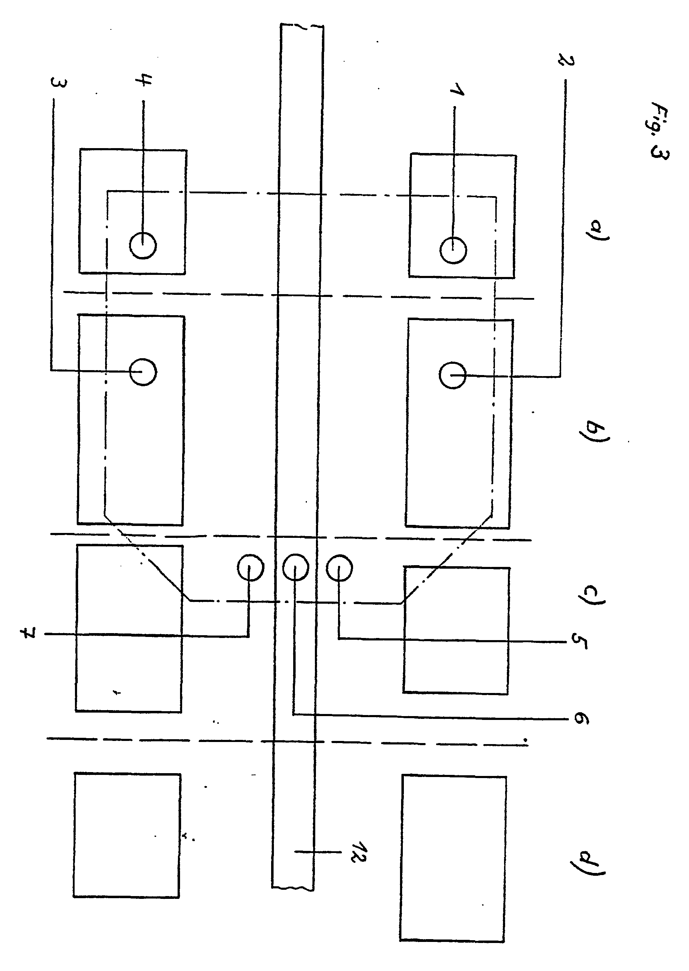

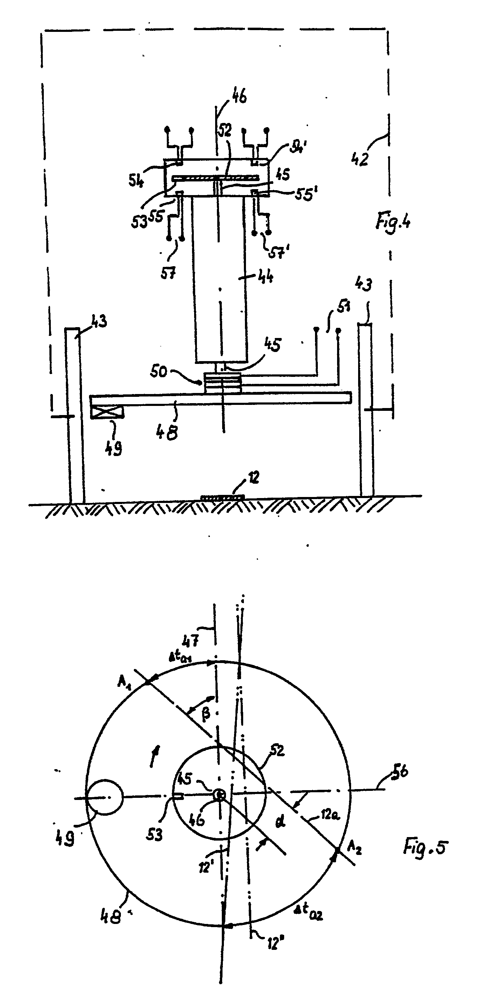

Fig. 3 zeigt weitere Möglichkeiten der Kodierung, die mit zwei zusätzlichen Kodierungssensoren 2, 3 abgetastet werden kann, welche in Förderrichtung versetzt zu den Kodiersensoren 1, 4 angeordnet sind. Mittels der vier Kodiersensoren lassen sich kurzen und lange Kodierungsstreifen unterscheiden, so daß sich die vier Konfigurationen gem. den Fig. 5a bis d ergeben. In Kombination mit einer einseitigen Kodierung und ggfs. einer Unterbrechung der Spur 12 ergeben sich somit zahlreiche Kodierungsmöglichkeiten, die für sämtliche vom Fahrzeug auszuführende Funktionen ausreichend sind. Zudem wäre eine seitliche Ausdehnung der Kodierungen mit entsprechender zusätzlicher oder alternativer Anordnung von Kodiersensoren möglich.

Ist die Spur 12 unterbrochen und liegt kein Halte- oder Abbiegebefehl vor, dann kann, ausgelöst durch einen Befehl des jetzt nicht mehr bedämpften Sensors 6, das Fahrzeug über eine bestimmte Wegstrecke hinweg weiterfahren, wobei es seine bei Auslösung des Befehls vorhandene Lenkstellung beibehält.

Auf dem Boden ist, wie Fig. 4 verdeutlicht, das schmale Aluminiumband 12 als Spurband verlegt, dem das Fahrzeug 42 folgen soll. Das Fahrzeug kann beispielsweise zwei ungelenkte Räder 43 und ein nicht dargestelltes gelenktes Rad 62 aufweisen.

Im Fahrzeug angeordnet ist ein Elektromotor 44, dessen Welle 45 sich mit konstanter Drehzahl dreht. Die Welle 45 verläuft mit ihrer Achse 46 vertikal und schneidet die Fahrzeuglängsachse 47.

Am unteren Ende in der Nähe des Bodens trägt die Welle 45 eine Scheibe 48, an deren Rand ein Induktivsensor 49 befestigt ist. Überwandert der Sensor 49 das Spurband 12, dann erzeugt er jeweils ein Signal, das über eine Schleifringanordnung 50 abgegriffen wird und an den Anschlüssen 51 zur Verfügung steht.
Der Sensor 49 übernimmt allein die Spurverfolgung und ersetzt die Sensoren 5, 6 und 7.

Das andere Ende der Welle 45 trägt eine Scheibe 52, die an ihrem Rand einen Schlitz 53 aufweist. Gegenüber dem Rand der Scheibe 52 sind angeordnet einerseits zwei Lichtquellen 54, 54' und andererseits zwei lichtempfindliche Bauelemente 55, 55', wobei es sich beispielsweise um Fotodioden oder Fototransistoren handeln kann. Eine Lichtquelle 54, 54' bildet mit dem gegenüberliegenden lichtempfindlichen Bauelement 55, 55' eine Lichtschranke.

Die Bauteile 54, 55 und 54', 55' sind angeordnet auf einer Querachse 56 des Fahrzeugs, die die Längsachse 47 des Fahrzeugs und die Rotationsachse 46 der Welle 45 rechtwinklig schneidet.

Überwandert der Sensor 49 bei seiner Drehbewegung im Uhrzeigersinn die Querachse 56, dann erzeugt das lichtempfindliche Bauteil 55 ein erstes Referenzsignal, das an den Anschlüssen 57 abgegriffen wird. Verläuft die Fahrzeuglängsachse 47 deckungsgleich mit dem Spurband 12, dann erreicht der Sensor 49 nach einer bestimmten Sollzeit den Bereich des Spurbandes 12 und erzeugt dabei ein Sensorsignal, das an den Anschlüssen 51 abgegriffen wird. Überwandert der Sensor bei seiner Weiterdrehung die Querachse 56 rechtsseitig, dann erzeugt das Bauteil 55' ein zweites Referenzsignal, das an den Anschlüssen 57' abgegriffen wird. Bei seiner Weiterdrehung um 90° überwandert der Sensor 49 wiederum das Spurband 12 und erzeugt somit nach Auftreten des zweiten Referenzsignals bei Ablauf der vorgenannten Sollzeit ein zweites Sensorsignal.

Weicht die Fahrzeuglängsachse 47 nach links vom Spurband 12' ab, wie dies in Fig. 5 angedeutet ist, dann wird die Zeitdauer zwischen dem Auftreten des ersten Referenzsignals und dem Auftreten des Sensorsignals größer (Istzeit) als die vorerwähnte Sollzeit. Ein Vergleich der Sollzeit mit der Istzeit besagt, daß eine Lenkkorrektur nach rechts erfolgen soll. Wird auch ein Zeitvergleich zwischen dem zweiten Referenzsignal und dem darauf folgenden Sensorsignal durchgeführt, dann kann hierdurch bestimmt werden, ob die Fahrzeuglängsachse 47 winkelig zum Spurband 12' oder parallel versetzt zum Spurband 12" verläuft. Bei einer Parallelversetzung (Lage des Spurbandes 12") ist die Zeitdifferenz zwischen der Istzeit abzüglich der Sollzeit bezüglich des ersten Referenzsignals gleich groß wie die Zeitdifferenz zwischen der Sollzeit und der Istzeit bezüglich des zweiten Referenzsignals.

Wird das Ergebnis des Soll-Ist-Zeitvergleichs bezüglich des ersten Referenzsignals verglichen mit dem Ergebnis des Soll-Ist-Zeitvergleichs bezüglich des zweiten Referenzsignals, dann ist es möglich, die Lage der Längsachse 47 relativ zum Spurband 12 exakt zu erfassen. Erläutert sei dies anhand der Fig. 5. Es sei hierbei angenommen, daß das Spurband 12a um den Winkel ß zur Längsachse 47 des Fahrzeugs geneigt verläuft und den Abstand d zum Koordinatenmittelpunkt aufweist, der von den Achsen 47, 56 gebildet wird. Das Ergebnis des Soll-Ist-Zeitvergleichs in Bezug auf das erste Referenzsignal ist die Zeitdauer $\Delta t_{a1}$, wodurch der Punkt A1 bestimmt ist. Das Ergebnis des Soll-Ist-Zeitvergleichs in Bezug auf das zweite Referenzsi-

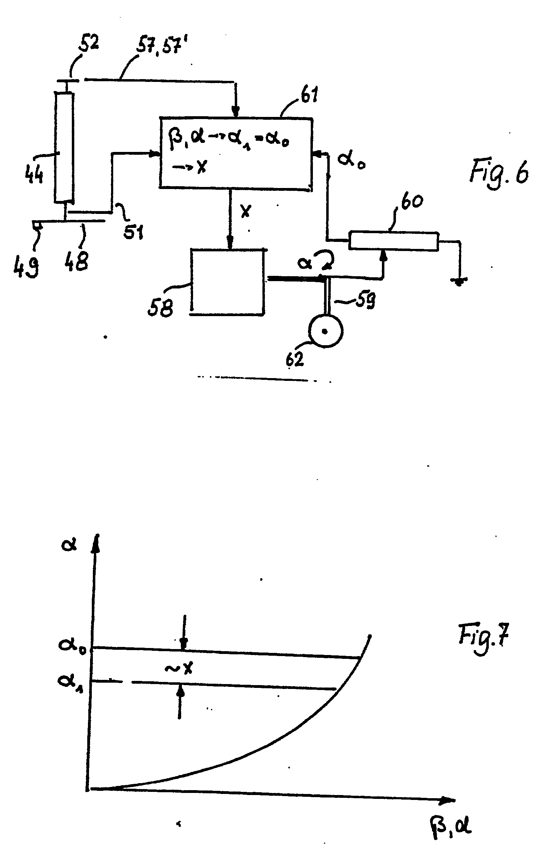

gnal ist die Zeitdauer Δt₍a2₎, wodurch der Punkt A2 bestimmt ist. Mittels einer Koordinatentransformation eines Vierquadrantenrechners ist es dann auf einfache Weise möglich, den Winkel ß und den Abstand d zu bestimmen, wobei diese Werte Regelabweichung darstellen. Aus dieser Regelabweichung ß und d wird der Lenkeinschlag ermittelt, der erforderlich ist, um das Fahrzeug so zu steuern, daß seine Längsachse 47 wieder deckungsgleich wird mit dem Spurband 12a. Das so erzeugte Steuersignal wird verglichen mit einem Signal, das der Stellung der Lenkung entspricht und hieraus ein Korrektursignal für den Stellmotor erzeugt, der die Lenkung des Fahrzeugs verstellt. Dies wird nachfolgend anhand der Fig. 6 erläutert. Hierbei ist mit 57 die Auswerteschaltung, mit 58 der Stellmotor für die Lenkung 59 und mit 60 ein Potentiometer bezeichnet, über dem die Iststellung der Lenkung 59 abgegriffen wird. Der Auswerteschaltung 57 werden die Referenzsignale von den Anschlüssen 57, 57' und die Sensorsignale von den Anschlüssen 51 zugeführt. Weiterhin wird der Auswerteschaltung 57 über das Potentiometer 60 die Iststellung der Lenkung zugeführt. Die Ergebnisse der Soll-Ist-Zeitvergleiche bezüglich des ersten und zweiten Referenzsignals werden in der Auswerteschaltung 57 miteinander verglichen, woraus sich die Werte der Regelabweichung ß und d ergeben. Hieraus wird ein Steuersignal erzeugt, das einem Lenkeinschlag α₁ entspricht. Dieser Solleinschlag α₁ wird verglichen mit dem tatsächlichen Lenkeinschlag α₀ und hieraus ein Korrektursignal x erzeugt, das dem Stellmotor 58 zugeführt wird, der die Lenkung 59 entsprechend korrigiert, wodurch das gelenkte Rad 62 des Fahrzeugs verstellt wird.

Um ein rasches Nachführen der Lenkung bei großen Regelabweichungen jedoch eine allmähliche Annäherung der Längsachse 47 des Fahrzeugs an das Spurband 12 zu erreichen, wird eine Steuerkurve gem. Fig. 7 gewählt, bei welcher gleiche Inkremente der Regelabweichung bei großen Regelabweichungen starke Lenkkorrekturen und bei geringen Regelabweichungen geringe Lenkkorrekturen bewirken.

Der Abstand des Sensors 49 zur Rotationsachse 46 ist größer als die halbe Breite des Spurbandes 12.

Eine gute Abschirmung gegenüber im Boden verlegten Metallteilen und Leitungen wird erreicht, wenn das Spurband folgenden Aufbau aufweist: Auf ein breites doppelseitiges Klebeband wird auf einer Seite eine Eisenblechfolie mit einer Dicke von 0,3mm und einer Breite von 300mm aufgeklebt. Der Abstand der Sensoren 5, 7 bzw. der Durchmesser auf den sich der Sensor 49 dreht, beträgt 200mm. Mittig auf dieser Eisenblechfolie ist ein Aluminiumstreifen von 10 bis 20mm aufgebracht. Aluminium- und Eisenblechfolie werden überdeckt durch eine Folie aus verschleißfestem Kunststoff.

## Patentansprüche

1. Transportsystem, bei welchem lenkbare und angetriebene, führerlose Fahrzeuge einem auf dem Boden angebrachten, aus Metallfolie bestehenden Spurband (12) folgen, das von mindestens einem ersten Sensor (6, 49) einer mittig am Fahrzeug angeordneten Sensoreinrichtung abgetastet wird, der einen Wechselspannungsoszillator aufweist, der ein elektrisches Wechselfeld in Richtung des Bodens erzeugt, mit seitlich des Spurbands (12) auf dem Boden angeordneten Markierungen (18, 20, 24, 26, 28, 30, 32, 34), die von mindestens zwei seitlichen, ebenfalls Wechselspannungsoszillatoren aufweisenden Sensoren (1, 2, 3, 4) am Fahrzeug abgetastet werden und mit einer Steuerschaltung am Fahrzeug, die in Abhängigkeit von Signalen des ersten Sensors (6, 49) Lenkbefehle und in Abhängigkeit von Signalen der seitlichen Sensoren (2, 3) Steuerbefehle erzeugt, dadurch gekennzeichnet, daß der erste Sensor (49) am Rand einer mit nahezu konstanter Drehzahl rotierenden Scheibe (48) angeordnet ist, deren Welle (45) mit ihrer Achse (46) vertikal verläuft, mittig am Fahrzeug angeordnet ist und dessen Längsachse (47) schneidet, der Abstand des ersten Sensors (49) zu dieser Achse (46) größer ist als die halbe Breite des Spurbandes (12), ein Signalgeber vorgesehen ist, der eine weitere zusammen mit der einen Scheibe (48) rotierende Scheibe (52) umfaßt, die eine Umfangsmarkierung (53) aufweist, welche mit einem ortsfest am Fahrzeug angeordneten Referenzsensor (54, 55) zusammenwirkt, der ein Referenzsignal erzeugt, wenn der erste Sensor (49) eine die Rotationsachse (46) schneidende Querachse (56) des Fahrzeugs (42) überwandert, eine Auswerteschaltung (61) die zeitliche Relativlage zwischen dem Referenzsignal und dem Sensorsignal erfaßt, das auftritt, wenn der erste Sensor (49) über das Spurband (12) wandert und in Abhängigkeit dieser zeitlichen Relativlage Lenkbefehle erzeugt, hierbei die Auswerteschaltung (61) eine Sollzeit speichert, die der Zeitdauer zwischen dem Auftreten des Referenzsignals und des Sensorsignals entspricht, wenn die Fahrzeuglängsachse (47) mit der Längsachse des Spurbandes (12) fluchtet, die Auswerteschaltung (61) diese Sollzeit mit der Istzeit vergleicht, die dem tatsächlichen zeitlichen Abstand des Auftretens des Referenz- und des Sensorssignals entspricht und den Lenkbefehl in Abhängigkeit des Ergebnisses dieses Soll-Ist-Zeitvergleichs erzeugt, die Wechselspannungsoszillatoren der seitlichen Sensoren (1, 2, 3, 4) ebenfalls ein elektrisches Wechselfed in Richtung des Bodens erzeugen, die Markierungen (18, 20, 24, 26, 28, 30, 32, 34) ebenfalls jeweils aus einer auf dem Boden angebrachten Metallfolie bestehen, die beiden seitlichen Sensoren (1, 2, 3, 4) jeweils aus einem Sensorpaar (1, 2; 3, 4) bestehen, deren Sensoren (1, 2; 3, 4) hintereinander angeordnet sind und die seitlichen Markierungen Kodierungen mit unterschiedlich langen Kodierkonfigurationen bilden.

2. Transportsystem nach Anspruch 1, dadurch gekennzeichnet, daß der Auswerteschaltung (61) ein der Stellung der Fahrzeuglenkung proportionales Signal zugeführt wird, das mit dem Lenkbefehl verglichen wird und bei einer Abweichung zwischen diesem Signal und dem Lenkbefehl die Auswerteschaltung (61) dem Stellmotor (58) der Fahrzeuglenkung Korrektursignale zuführt.

3. Transportsystem nach Anspruch 1 oder 2, dadurch gekennzeichnet, daß unterhalb des Spurbandes (12), das aus Aluminium besteht, eine Eisenblechfolie angeordnet ist, deren Breite größer ist als der doppelte Abstand des ersten Sensors (49) zur Rotationsachse (46).

## Claims

1. A transport system in which steerable and driven, driverless vehicles follow a track (12) which is arranged on the ground and consists of metal foil and which is scanned by at least one first sensor (6, 49) of a sensor device arranged centrally on the vehicle, which sensor comprises an a.c. voltage oscillator which generates an electric a.c. field in the direction of the ground, with marks (18, 20, 24, 26, 28, 30, 32, 34) which are arranged on the ground laterally to the track (12) and which are scanned by at least two lateral sensors (1, 2, 3, 4) on the vehicle which likewise comprise a.c. voltage oscillators, and with a control circuit which is arranged on the vehicle and which generates steering commands in dependence upon signals from the first sensor (6, 49) and control commands in dependence upon signals from the lateral sensors (2, 3), characterised in that the first sensor (49) is arranged at the edge of a disc (48) which rotates at an approximately constant rotation speed and whose shaft (45) has its axis (46) extending vertically, is arranged centrally on the vehicle and intersects the longitudinal axis (47) of the vehicle, where the distance between the first sensor (49) and this axis (46) is greater than half the breadth of the track (12), a signal generator is provided which comprises a further disc (52) which rotates together with the first disc (48) and which is provided with a peripheral mark (53) which cooperates with a reference sensor (54, 55) which is fixed to the vehicle and which generates a reference signal when the first sensor (49) moves across a transverse axis (56) of the vehicle (42) which intersects the axis of rotation (46), an analysis circuit (61) detects the relative time position between the reference signal and the sensor signal which occurs when the first sensor (49) moves over the track (12) and in dependence upon this relative time position generates steering commands, where the analysis circuit (61) stores a theoretical time corresponding to the length of time between the occurrence of the reference signal and the sensor signal when the vehicle longitudinal axis (47) aligns with the longitudinal axis of the track (12), the analysis circuit (61) compares this theoretical time with the actual time corresponding to the actual interval of time between the occurrence of the reference signal and the sensor signal and generates the steering command in dependence upon the result of this theoretical-actual time comparison, the a.c. voltage oscillators of the lateral sensors (1, 2, 3, 4) likewise produce an electric a.c. field in the direction of the ground, the marks (18, 20, 24, 26, 28, 30, 32, 34) likewise consist of a metal foil arranged on the ground: the two lateral sensors (1, 2, 3, 4) each comprise a pair of sensors (1, 2; 3, 4) in which the sensors (1, 2; 3, 4) are arranged in series and the lateral marks form codes comprising coding configurations of different lengths.

2. A transport system as claimed in Claim 1, characterised in that the analysis circuit (61) is supplied with a signal which is proportional to the position of the vehicle steering device and which is compared with the steering command and in the event of a deviation between this signal and the steering command the analysis circuit (61) supplies correcting signals to the servo-motor (58) of the vehicle steering device.

3. A transport system as claimed in Claim 1 or Claim 2, characterised in that beneath the track (12) which consists of aluminium is arranged a sheet iron foil, the breadth of which is greater than double the distance between the first sensor (49) and the axis of rotation (46).

## Revendications

1) Système de transport dans lequel des véhicules dirigeables et actionnés, sans conducteur, suivent une piste matérialisée (12) en feuillard métallique, disposée au sol, qui est balayée par au moins un palpeur (6, 49) faisant partie d'un mécanisme de balayage, logé au centre du véhicule, comportant un oscillateur de tension alternative, qui produit un champ électrique alternatif en direction du sol, avec des marquages (18, 20, 24, 26, 28, 30, 32, 34) disposés au sol, latéralement par rapport à la piste matérialisée (12), balayés par au moins deux palpeurs latéraux (1, 2, 3, 4) au véhicule, possédant également des oscillateurs de tension alternative, et d'un manipulateur de commande, au véhicule, qui engendre des ordres de guidage, en fonction de signaux émanant du premier palpeur (6, 49) et des ordres de commande, en fonction de signaux provenant des palpeurs latéraux (2, 3), caractérisé en ce que le premier palpeur (49) est placé au bord d'un disque (48) tournant à une vitesse de rotation presque constante, dont l'arbre (45) avec son axe (46) s'étend verticalement, est logé à la partie centrale du véhicule et coupe son axe longitudinal (47), que l'intervalle entre le premier palpeur (49) et cet axe (46) est supérieur à la demi-largeur de la piste matérialisée (12), qu'un émetteur de signaux est prévu, qui comprend en plus du disque (48) un deuxième disque (52), en rotation avec le premier, qui présente un marquage périphérique (53) agissant ensemble avec un palpeur de référence (54, 55), solidaire du véhicule, qui produit un signal de référence lorsque le premier palpeur (49) franchit un axe transversal (56) coupant l'axe de rotation (46) du véhicule (42), qu'un évaluateur (61) saisit la position chronologique relative entre le signal de référence et le signal du palpeur, qui se déclenche à l'instant où le premier palpeur (49) balaie la piste matérialisée (12) et engendre des ordres de guidage, en fonction de cette position chronologique relative, que par ce fait l'évaluateur (61) mémorise un temps nominal, qui correspond à l'intervalle de temps s'écoulant entre le déclenchement du signal de référence et celui du signal du palpeur, lorsque l'axe longitudinal (47) du véhicule coïncide avec l'axe longitudinal (12) de la piste matérialisée, que l'évaluateur (61) compare ce temps nominal avec le temps réel, qui correspond à l'intervalle de temps effectif entre la production du signal de référence et celui du palpeur et crée l'ordre de guidage, en fonction du résultat de cette comparaison entre le temps nominal et le réel, que les oscillateurs de tension alternative des palpeurs latéraux (1, 2, 3, 4) engendrent également un champ électrique alternatif en direction du sol, que les marquages (18, 20, 24, 26, 28, 30, 32, 34) sont également constitués par un feuillard métallique à chaque fois disposé au sol, que les deux palpeurs latéraux (1, 2, 3, 4) se composent respectivement d'une paire de palpeurs (1, 2, 3, 4) dont les palpeurs (1, 2, 3, 4) sont placés les uns derrière les autres, et que les marquages latéraux forment des équipements de codage à configurations de codage de longueurs diverses.

2) Système de transport, selon la revendication 1, caractérisé en ce que l'évaluateur (61) reçoit un signal proportionnel à la position de guidage du véhicule, qui est comparé à l'ordre de guidage et amène, en cas de divergence entre ce signal et l'ordre de guidage, au servo-moteur (58), par l'intermédiaire de l'évaluateur (61), des signaux de correction du guidage du véhicule.

3) Système de transport, selon la revendication 1 ou 2, caractérisé en ce qu'en-dessous de la piste matérialisée (12), en aluminium, est logé un feuillard en tôle d'acier, dont la largeur est supérieure au double de l'intervalle compris entre le premier palpeur (49) et l'axe de rotation (46).

Fig. 1

Fig 2a

Fig 2b

Fig.2c

Fig. 3

Fig.4

Fig.5

Fig. 6

Fig. 7